# EUROPÄISCHE PATENTSCHRIFT

(11) **EP 4 329 978 B1**
(45) Veröffentlichungstag und Bekanntmachung des Hinweises auf die Patenterteilung: **22.04.2026**
(21) Anmeldenummer: 22725783.9
(22) Anmeldetag: 26.04.2022
(51) Int. Cl.: B23K 26/03, B23K 26/0622, B23K 26/122, B23K 26/16, B23K 26/082, B23K 26/12, B23K 26/38, B23K 26/70

(54) **VERFAHREN ZUR LASERBEARBEITUNG VON WERKSTÜCKEN IN FLÜSSIGKEIT**
METHOD FOR LASER PROCESSING OF WORKPIECES IN LIQUID
PROCÉDÉ D'USINAGE AU LASER DE PIÈCES DANS UN LIQUIDE

(30) Priorität: 30.04.2021 DE 102021111172
(43) Veröffentlichungstag der Anmeldung: 06.03.2024
(73) Patentinhaber: LIDROTEC GmbH, 44805 Bochum (DE)
(72) Erfinder: KANITZ, Alexander, 58452 Witten (DE); HOPPIUS, Jan Stefan, 46284 Dorsten (DE); KÖHLER, Jannis, 46514 Schermbeck (DE); IGELMANN, Alexander, 44797 Bochum (DE)
(74) Vertreter: dompatent
(86) Internationale Anmeldenummer: PCT/EP2022/061047
(87) Internationale Veröffentlichungsnummer: WO 2022/229182

(56) Entgegenhaltungen:
- CN-A- 112 589 261
- CN-A- 113 146 078
- JP-A- 2022 067 857
- ZHOU JIA ET AL: "Study on the mechanism of ultrasonic-assisted water confined laser micromachining of silicon", OPTICS AND LASERS IN ENGINEERING, ELSEVIER, AMSTERDAM, NL, vol. 132, 27 April 2020 (2020-04-27), XP086163262, ISSN: 0143-8166, [retrieved on 20200427], DOI: 10.1016/J.OPTLASENG.2020.106118

## Beschreibung

Die vorliegende Erfindung betrifft ein Verfahren zur Laserbearbeitung von Werkstücken in Flüssigkeit.

In CN 112 589 261 A ist eine Vorrichtung für die Laserbearbeitung von Werkstücken beschrieben. Die Bearbeitungsvorrichtung weist eine Prozessiereinheit, eine Überwachungseinheit und eine Steuereinheit auf. Die Prozessiereinheit verfügt über eine Ultrakurzpuls-Laserstrahlquelle, ein optisches Element, einen Positioniertisch sowie einen Glasbehälter.

In ZHOU JIA ET AL: "Study on the mechanism of ultrasonic-assisted water confined laser micromachining of silicon", OPTICS AND LASERS IN ENINEERING, ELSEVIER, AMSTERDAM, NL, vol. 132, 27 April 2020 (2020-04-27), XP086163262, ISSN: 0143-8166, DOI: 10.1016/J.OPTLASENG.2020.106 118 ist eine Vorrichtung für die Laserbearbeitung von Silizium in einer Wasserumgebung beschrieben. Die während der Laserbearbeitung im Wasser entstehenden Blasen werden dabei durch eine Hochgeschwindigkeitskamera überwacht.

In der nach dem Prioritätsdatum der vorliegenden Anmeldung veröffentlichten Druckschrift CN 113 146 078 A ist eine Vorrichtung sowie ein Verfahren zur Beobachtung und Reduzierung von Gasblasen beschrieben, die während einer Laserprozessierung in einer Wasserumgebung entstehen. Die in dieser Druckschrift beschriebene Vorrichtung weist eine Ultraschallvibrationseinheit auf, die einer Prozesskammer angeordnet ist und dazu verwendet wird, Ultraschallschwingungen zu erzeugen, um die Erzeugung von Luftblasen während der Prozessierung eines Werkstücks zu vermeiden.

In der nach dem Prioritätstag der vorliegenden Anmeldung eingereichten Druckschrift JP 2022 067857 A ist eine weitere Vorrichtung für die Lasermaterialbearbeitung beschrieben.

Die Vorteile der Bearbeitung von Werkstücken unter Verwendung von Laserstrahlung sind im Allgemeinen bekannt. Insbesondere erlaubt der Einsatz von Laserstrahlung eine hohe Präzision bei der Materialbearbeitung und hohe Prozessgeschwindigkeiten. Eine Herausforderung bei der Lasermaterialbearbeitung ist darin zu sehen, dass sich das bearbeitete Werkstück durch den Einsatz der fokussierten Laserstrahlung lokal stark erhitzt. Die resultierenden thermischen Effekte außerhalb der Bearbeitungszone sind in der Regel unerwünscht.

Zur Verbesserung des Laserbearbeitungsprozesses erfolgt bei einigen Anwendungen der Laserbearbeitungsprozess in einer Flüssigkeit. Das zu bearbeitende Werkstück wird dabei in einer mit der Flüssigkeit befüllten Prozesskammer angeordnet, sodass das Werkstück während des gesamten Prozesses durch die Flüssigkeit gekühlt wird.

Ferner ist es bei derartigen Prozesskammern teilweise vorgesehen, dass die Flüssigkeit in der Kammer während des Bearbeitungsprozesses permanent ausgetauscht wird. Hierzu kommen in der Regel Pumpen zum Einsatz, die eine Strömung innerhalb der Prozesskammer erzeugen und die Flüssigkeit in der Prozesskammer stetig austauschen.

Ein Nachteil bei der Laserbearbeitung von Werkstücken in Flüssigkeit ist darin zu sehen, dass innerhalb der Prozesskammer Gasblasen entstehen können. Die Ursache für die Entstehung der Gasblasen kann dabei vielfältig sein. Insbesondere können die Gasblasen durch die Wechselwirkung der Laserstrahlung und dem Werkstück oder durch die Zirkulation der Flüssigkeit entstehen.

Beispielsweise können haftende Gasblasen (auch als persistente Blasen bezeichnet) durch den Laserprozess entstehen und sich auf der Werkstückoberfläche im Bereich der bearbeiteten Fläche bilden. Diese können sich im Laufe der Zeit von der Werkstückoberfläche lösen und sich als freie Gasblasen durch die Prozesskammer bewegen. Auch können sie sich, bedingt durch einen Flüssigkeitsaustausch im System, mehrfach durch das System bewegen und dadurch den Laserbearbeitungsprozess wiederholt stören.

Andererseits können sich im System auch Gasblasen bilden, die unabhängig von der Wechselwirkung zwischen der Laserstrahlung und dem Werkstück entstehen. Beispielsweise können beim Systemstart freie Gasblasen in der Prozesskammer entstehen, wenn die Prozesskammer oder die Schläuche im Initialzustand mit Luft gefüllt sind. Beim Befüllen der Prozesskammer mit Flüssigkeit, die aus einem Reservoir in die Kammer befördert wird, bilden sich häufig Gasblasen innerhalb der Prozesskammer. Dabei wird die Luft aus den Schläuchen mehrfach in Form von Gasblasen ins Flüssigkeitsreservoir gespült und von dort wieder in das Schlauch-Kammer-System gepumpt. Die Gasblasen erreichen dabei häufig erst nach mehreren Minuten die Flüssigkeitsoberfläche im Reservoir und stellen erst dann keine Beeinträchtigung mehr für den Laserbearbeitungsprozess dar.

Wie bereits einleitend erläutert, entstehen in der Prozesskammer üblicherweise zwei unterschiedliche Typen von Gasblasen, nämlich einerseits haftende bzw. persistente Gasblasen, die sich in der Regel auf der Werkstückoberfläche festsetzen und andererseits freie Gasblasen, die sich durch die Prozesskammer oder auch durch das gesamte System (Prozesskammer, Schläuche, Reservoir) bewegen können. Grundsätzlich gilt, dass sich haftende Gasblasen im Laufe der Zeit zu freien Gasblasen umwandeln können und umgekehrt.

Unabhängig von der spezifischen Art der Gasblase gilt stets, dass diejenigen Gasblasen, die sich im Wirkungsbereich der Laserstrahlung befinden, eine unerwünschte Wechselwirkung mit der Laserstrahlung verursachen. Dies ist durch den unterschiedlichen Brechungsindex von Luft und Flüssigkeit begründet, aufgrund dessen es zur unerwünschten Reflexion und Brechung der verwendeten Laserstrahlung an der Grenzschicht zwischen der Flüssigkeit und der Gasblase kommt.

Zur Behebung der vorstehend beschriebenen Problematik wird mit der in Anspruch 1 definierten Erfindung ein Verfahren zur Laserbearbeitung von Werkstücken in Flüssigkeit vorgeschlagen, wobei das Verfahren die nachfolgenden Schritte aufweist:
- Bereitstellen eines Werkstückes in einer mit einer Flüssigkeit befüllten Prozesskammer;
- Fokussierung einer gepulsten Laserstrahlung auf eine Oberfläche des Werkstückes unter Verwendung einer Fokussiereinheit;
- Erzeugung einer relativen Bewegung zwischen der fokussierten Laserstrahlung und der Werkstückoberfläche unter Verwendung einer Positioniereinheit;
- Detektion einer Gasblase in einem vordefinierten Detektionsbereich unter Verwendung einer Detektionseinheit; und
- Durchführung einer ersten Aktion zur Vermeidung oder Reduzierung von Wechselwirkungseffekten zwischen der Laserstrahlung und der detektierten Gasblase.

Das erfindungsgemäße Verfahren erlaubt es, etwaige Störeffekte, die durch Gasblasen in der Prozesskammer verursacht werden, zu eliminieren oder zumindest deutlich zu reduzieren. Dadurch kann die Prozessgeschwindigkeit erhöht werden, während gleichzeitig die Qualität der bearbeiteten Werkstücke verbessert wird. Das erfindungsgemäße Verfahren erlaubt insbesondere eine Verbesserung der Schnittkanten beim Laserschneideprozess, wobei sich die Verbesserung durch die Reduzierung der Störeffekte einstellt.

Bei der eingesetzten Flüssigkeit kann es sich beispielsweise um Wasser handeln. Die verwendete Fokussiereinheit kann insbesondere als Fokussierlinse, Fokussierspiegel oder als ein Linsensystem ausgeführt sein. Die Erzeugung der Relativbewegung kann entweder durch eine Ablenkung der Strahlung erfolgen oder durch die Positionierung des Werkstückes. Die Positioniereinheit kann insofern als ein schwenkbarer Spiegel (auch als Scannerspiegel bezeichnet), als ein drehbarer Spiegel (z. B. ein Polygonscanner) oder in Form eines Positioniertisches ausgeführt sein. Die Entstehung etwaiger Gasblasen kann in einem Detektionsbereich überwacht werden, der beispielsweise die gesamte Prozesskammer umfasst. Der Detektionsbereich kann dabei einen zusammenhängenden Bereich umfassen oder aber auch voneinander separate Bereiche.

Beispielsweise kann es vorgesehen sein, dass der Detektionsbereich einerseits den Innenraum der Prozesskammer umfasst und andererseits die Schläuche überwacht, durch die Flüssigkeit oder aber auch Gas bzw. Gasblasen in die Kammer hineingeführt werden können. Der Detektionsbereich kann dabei statisch oder aber auch dynamisch ausgeführt sein. Ein statischer Detektionsbereich kann beispielsweise vorteilhaft sein, wenn der gesamte Innenraum der Prozesskammer überwacht werden soll. In einigen Ausführungsformen kann es jedoch explizit gewünscht sein, dass nicht die gesamte Prozesskammer überwacht wird, sondern lediglich ein Bereich der Prozesskammer, in dem die Laserstrahlung zum aktuellen Zeitpunkt wirkt. Dies kann beispielsweise bei relativ großen Prozesskammern gewünscht sein, da etwaige Gasblasen weit von der Laserstrahlung entfernt sein können, sodass sie den Laserprozess nicht beeinflussen und daher die Entfernung dieser Gasblasen nicht zwingend erforderlich ist. In diesem Fall kann es vorgesehen sein, dass der Detektionsbereich in Abhängigkeit von der aktuellen Laserstrahlposition dynamisch eingestellt wird.

Bei der ersten Aktion werden ein oder mehrere Schritte durchgeführt, um Störeffekte bei der Laserbearbeitung des Werkstückes, die durch die detektierte Gasblase verursacht werden, zu vermeiden oder zumindest zu reduzieren. Die Schritte können insbesondere dazu dienen , die detektieren Gasblasen aus dem Prozessbereich zu eliminieren. Dabei ist der Zusatz "erste" nicht als Einschränkung zu verstehen oder als ein Hinweis auf weitere Aktionen. Vielmehr dient dieser Zusatz zur leichteren Bezugnahme im Rahmen der vorliegenden Anmeldung. Die erste Aktion wird immer dann durchgeführt, wenn eine Gasblase in dem vordefinierten Detektionsbereich erkannt wird. Gemäß einer Ausführungsform der vorliegenden Erfindung kann es vorgesehen sein, dass die erste Aktion so lange durchgeführt wird, bis keine Gasblase mehr in dem Detektionsbereich vorhanden ist. Die erste Aktion wird als Reaktion auf die Detektion der Gasblase durchgeführt und kann insbesondere in Abhängigkeit von der detektieren Blase (z. B. Ort und Größe der Blase) durchgeführt werden.

Auch wenn das erfindungsgemäße Verfahren für das leichtere Verständnis vorstehend mit einer konkreten Reihenfolge der Verfahrensschritte beschrieben ist, so ist es für den Fachmann ersichtlich, dass es für die Erreichung der technischen Wirkung bei der vorliegenden Erfindung nicht erforderlich ist, die einzelnen Schritte zwingend in einer bestimmten Reihenfolge durchzuführen.

Gemäß einer Ausführungsform des erfindungsgemäßen Verfahrens kann vorgesehen sein, dass die Detektion der Gasblase die folgenden Schritte aufweist:
- Erstellung einer photographischen Aufnahme von dem vordefinierten Detektionsbereich unter Verwendung einer Kameraeinheit und Erzeugung einer entsprechenden Bilddatei; und
- Auswertung der Bilddatei, wobei die Auswertung insbesondere den Einsatz eines Musterkennungsalgorithmus umfasst.

Gemäß dieser Ausführungsform kann eine automatisierte Detektion etwaiger Gasblasen erfolgen, wobei im Falle einer detektierten Gasblase automatisch eine Aktion zur Entfernung der Blase durchgeführt werden kann. Zudem kann vorgesehen sein, dass die durchzuführende Aktion automatisch und in Abhängigkeit von dem Ort oder der Art der detektierten Blase (beispielsweise freie oder haftende Blase) ausgewählt wird. Der Einsatz eines Mustererkennungsalgorithmus erlaubt zudem, den Automatisierungsgrad des erfindungsgemäßen Verfahrens zu erhöhen.

Ferner kann gemäß der vorliegenden Erfindung vorgesehen sein, dass die Detektion der Gasblase eine Streulichtmessung umfasst, wobei die Streulichtmessung insbesondere die folgenden Schritte aufweist:
- Beleuchtung des Detektionsbereiches unter Verwendung einer LED;
- Aufnahme eines Detektionssignals unter Verwendung einer Photodiode, wobei die Photodiode dazu ausgelegt ist, die von der LED emittierte Strahlung nach Ausbreitung durch den Detektionsbereich aufzunehmen;
- Auswertung des Detektionssignals unter Verwendung einer Auswertungseinheit.

Dabei können die LED und die Photodiode beispielsweise an zwei gegenüberliegenden Seiten der Prozesskammer angeordnet sein, wobei das von der LED emittierte Licht durch ein erstes Prozessfenster in die Kammer gelangen kann, während das Streulicht durch ein zweites Prozessfenster aus der Kammer herausgeführt werden und anschließend von der Photodiode aufgenommen werden kann.

Alternativ zur LED können auch andere Lichtquellen eingesetzt werden, wie beispielsweise eine Halogenleuchte oder eine Laserstrahlquelle. Der Einsatz einer LED hat jedoch den Vorteil, dass LEDs leicht anzusteuern und kostengünstig erhältlich sind. Der überwachte Detektionsbereich kann beispielsweise den gesamten Innenraum der Prozesskammer umfassen oder alternativ nur einen Teil der Prozesskammer. Auch kann es vorgesehen sein, dass einzelne Abschnitte der Zulauf- oder Ablaufschläuche überwacht werden, in denen die Entstehung von Gasblasen zu erwarten ist. Die Auswertungseinheit kann insbesondere eine Recheneinheit aufweisen. Beispielsweise kann die Auswertungseinheit einen PC, einen Laptop oder einen Mikrocontroller aufweisen. Bei der Auswertung kann das Detektionssignal, das durch die Photodiode erzeugt wird, insbesondere mit Referenzsignalen verglichen werden, die zuvor während eines Kalibrierungsprozesses aufgenommen wurden. Beispielsweise kann während der Kalibrierung ein Referenzsignal in einem Anwendungsszenario aufgenommen worden sein, in der keine Gasblase in dem Detektionsbereich vorhanden war. Sofern das Detektionssignal eine signifikante Abweichung von dem Referenzsignal aufweist, kann daraus geschlossen werden, dass eine Gasblase zwischen der LED und der Photodiode vorhanden ist.

Ferner kann vorgesehen sein, dass die Detektionseinheit einen Ultraschallsensor, einen Radarsensor, einen kapazitiven Sensor und/oder einen elektromagnetischen Sensor aufweist. Auch kann vorgesehen sein, dass die Detektionseinheit eine Sauerstoffsensoreinheit umfasst. Die Messung der Sauerstoffkonzentration innerhalb der Prozesskammer gibt Aufschluss über die Wahrscheinlichkeit, dass Gasblasen in der Flüssigkeit vorhanden sind, da sich die Sauerstoffkonzentration von gelösten Gasblasen bzw. von Mikroblasen von der Sauerstoffkonzentration von Flüssigkeiten signifikant unterscheidet.

Gemäß einer weiteren Ausführungsform der Erfindung kann vorgesehen sein, dass die erste Aktion eine Veränderung der Strömungsgeschwindigkeit der

Flüssigkeit innerhalb der Prozesskammer umfasst. Insbesondere kann dabei vorgesehen sein, dass die Strömungsgeschwindigkeit innerhalb der Kammer bei Detektion einer Gasblase abrupt erhöht wird, damit die im Detektionsbereich detektierte Gasblase entfernt werden kann. Auch kann vorgesehen sein, dass die Strömungsrichtung umgekehrt wird, um eine effizientere Entfernung der detektierten Gasblase zu erreichen. Die Umkehr der Strömungsrichtung kann dabei mehrmals hintereinander erfolgen und bevorzugt so lange wiederholt werden, bis eine detektierte und auf einer Oberfläche haftende Gasblase von dieser Oberfläche gelöst ist. Die Strömung innerhalb der Kammer kann dabei insbesondere dadurch erzeugt werden, dass Pumpen eingesetzt werden, die Flüssigkeit in die Kammer hinein oder aus der Kammer heraus befördern. Alternativ dazu kann es vorgesehen sein, dass die Strömung durch eine Bewegung der Kammer erzeugt wird.

Nicht Teil der vorliegenden Erfindung ist, dass die erste Aktion eine Positionierung der Laserstrahlung derart umfasst, dass die Laserstrahlung auf die detektierte Gasblase gerichtet ist. Insbesondere bei haftenden Gasblasen kann dadurch erreicht werden, dass die Gasblase von der Oberfläche, auf der die Gasblase haftet, gelöst wird. Haftet die Gasblase beispielsweise auf der Werkstückoberfläche und wird die Laserstrahlung auf die Gasblase gerichtet, so entstehen dabei durch die Wechselwirkung der Laserstrahlung mit der Werkstückoberfläche Stoßwellen (auch als "shock waves" bezeichnet), die zur Lösung der Gasblase von der Werkstückoberfläche beitragen. Dadurch wird in vorteilhafter Weise ein und derselbe Laserstrahl sowohl für die Materialbearbeitung als auch für das Loslösen der haftenden Gasblasen verwendet. Bei dieser Ausführungsform wird also der Laserstrahl als kombiniertes Werkzeug zur Bearbeitung des Werkstückes und für das Loslösen der Gasblasen eingesetzt, sodass keine zusätzlichen Komponenten für das Loslösen der Gasblasen erforderlich sind.

Gemäß einer weiteren Ausführungsform, die nicht Teil der vorliegenden Erfindung ist kann vorgesehen sein, dass die Laserstrahlung in einer defokussierten Form auf den Bereich der Werkstückstückoberfläche gerichtet ist, in dem eine haftende Gasblase detektiert wurde. Dadurch kann die Erzeugung der Stoßwelle in einem größeren Bereich der Werkstückoberfläche erfolgen, wodurch ein gleichmäßigeres und effizienteres Loslösen der Gasblase von der Werkstückoberfläche ermöglicht wird. Der Strahldurchmesser auf der Werkstückoberfläche kann dabei so eingestellt sein, dass dieser 50 %, 80 % oder 100 % des Durchmessers der Gasblase beträgt. Die Defokussierung der Laserstrahlung kann insbesondere durch Variation der Position der Fokussiereinheit erfolgen oder durch die Variation der Position des Werkstückes.

Ferner kann gemäß einer Ausführungsform der Erfindung vorgesehen sein, dass die erste Aktion eine Erzeugung von Ultraschallwellen in der Umgebung der detektierten Gasblase unter Verwendung eines Ultraschallgenerators umfasst. Hierzu kann es insbesondere vorgesehen sein, dass ein Ultraschallgenerator in unmittelbarer Nähe des Werkstückes oder aber auch in unmittelbarer Nähe der für die Erzeugung der Strömung in der Prozesskammer verwendeten Schläuche bzw. Leitungen angeordnet ist. Der Ultraschallgenerator kann insbesondere ein Piezoelement aufweisen, das elektrisch angesteuert wird.

Darüber hinaus kann gemäß der vorliegenden Erfindung vorgesehen sein, dass die erste Aktion eine Veränderung der Strömungsart umfasst, wobei die Strömungsart insbesondere zwischen laminar, turbulent und pulsierend variiert werden kann. In ersten Untersuchungen konnte gezeigt werden, dass durch die Variation der Strömungsart ein besonders effizientes Loslösen haftender Gasblasen erreicht werden kann.

Gemäß der vorliegenden Erfindung sind zudem die nachfolgenden Schritte vorgesehen:
- Ermittlung einer Transitzeit für die detektierte Gasblase, innerhalb derer sich die Gasblase in einem Bereich aufhält, in dem eine Wechselwirkung zwischen der Laserstrahlung und der Gasblase zu erwarten ist; und
- Deaktivierung der Laserstrahlung für die Dauer der ermittelten Transitzeit; oder
- Positionierung der Laserstrahlung derart, dass die Laserstrahlung außerhalb der Gasblase angeordnet ist.

Bei der Ermittlung der Transitzeit kann insbesondere ein kamerabasiertes Verfahren eingesetzt werden, bei dem die Geschwindigkeit, mit der sich eine freie Gasblase innerhalb des Detektionsbereiches bewegt, bestimmt wird. Anschließend kann berechnet werden, zu welcher Zeit und für welche Dauer sich die detektierte Gasblase in dem Bereich aufhält, in dem eine Wechselwirkung zwischen der Laserstrahlung und der Gasblase zu erwarten ist (= Transitzeit). Schließlich wird die Laserstrahlung für die ermittelte Transitzeit deaktiviert oder an eine Position überführt, in der keine Wechselwirkung zwischen der Laserstrahlung und der Gasblase stattfindet. Für die Deaktivierung der Laserstrahlung kann beispielsweise die Laserstrahlquelle ausgeschaltet oder alternativ ein Strahlabsorber verwendet werden. Alternativ kann ein Strahlmodulator, insbesondere ein akustooptischer Modulator (auch als AOM bezeichnet) oder ein elektrooptischer Modulator (auch als EOM bezeichnet) verwendet werden, um die Strahlung besonders schnell umzulenken. Sobald die detektierte Gasblase den Kollisionsbereich verlassen hat, kann die Laserstrahlung wieder aktiviert werden. Alternativ kann es vorgesehen sein, dass für einen Laserbearbeitungsprozess eine Laserstrahltrajektorie vorgegeben ist, wobei bei der Ermittlung der Gasblase berechnet wurde, dass eine Wechselwirkung zwischen der Laserstrahlung und einer freien Gasblase bevorsteht. In diesem Fall kann die Laserstrahlung die vorgegebene Trajektorie verlassen und dadurch den Kollisionsbereich "überspringen", sodass dieser Bereich des Werkstückes zu einem späteren Zeitpunkt bearbeitet wird, sobald die Gasblase den Kollisionsbereich wieder verlassen hat. Auf diese Weise werden Wechselwirkungen zwischen der Laserstrahlung und der Gasblase signifikant reduziert und die Prozessqualität und -geschwindigkeit deutlich erhöht.

Die vorliegende Erfindung wird nachfolgend anhand der Figuren veranschaulicht, welche Folgendes zeigen:
- Fig. 1: ein System zur Lasermaterialbearbeitung in Flüssigkeit gemäß dem Stand der Technik,
- Fig. 2: den Laserbearbeitungsprozess im Idealfall und bei Vorhandensein einer Gasblase im Bearbeitungsbereich,
- Fig. 3: eine schematische Darstellung eines Ausführungsbeispiel des erfindungsgemäßen Verfahrens,
- Fig. 4: eine schematische Darstellung von Ausführungsbeispielen für die erfindungsgemäße Detektion der Gasblasen, und
- Fig. 5.: eine schematische Darstellung von Ausführungsbeispielen für die erfindungsgemäße Aktion zur Vermeidung von Wechselwirkungseffekten zwischen der Laserstrahlung und der detektierten Gasblase.

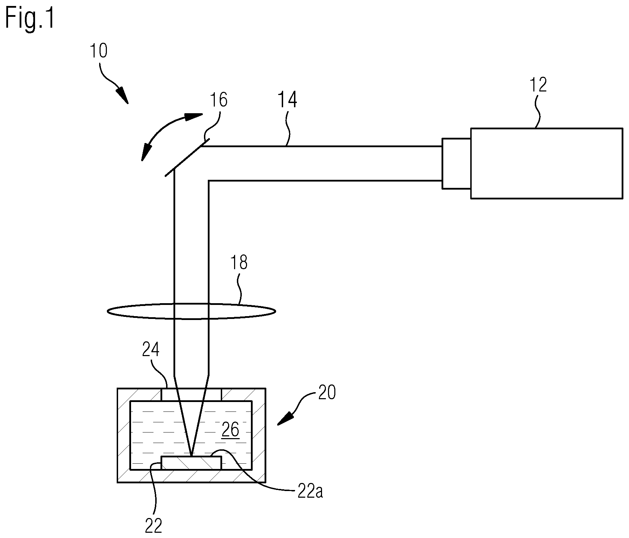

In der Fig. 1 ist ein System 10 zur Laserbearbeitung in Flüssigkeit gezeigt, das bereits aus dem Stand der Technik bekannt ist. Ein derartiges System 10 weist eine Laserstrahlquelle 12 auf, die eine gepulste Laserstrahlung 14 erzeugt. Über eine Positioniereinheit 16 kann die Ausrichtung der Laserstrahlung 14 eingestellt werden. Die Laserstrahlung 14 wird über eine Fokussiereinheit 18 in den Innenraum einer Prozesskammer 20 fokussiert. Innerhalb der Prozesskammer 20 ist ein zu bearbeitendes Werkstück 22 angeordnet. Die fokussierte Laserstrahlung 14 wird auf eine Oberfläche 22a des Werkstückes 22 gerichtet, sodass das Werkstück 22 gezielt an der gewünschten Stelle aufgeheizt wird und verdampfen kann. Die Laserstrahlung gelangt dabei über ein transparentes Prozessfenster 24 in die Prozesskammer 20, wobei die Prozesskammer 20 im Übrigen nicht lichtdurchlässig ist. Die Prozesskammer 20 ist mit einer Flüssigkeit 26 befüllt. Bei der Flüssigkeit 26 kann es sich beispielsweise um Wasser handeln. Die Flüssigkeit dient beispielsweise dazu, das Werkstück während des Bearbeitungsprozesses zu kühlen.

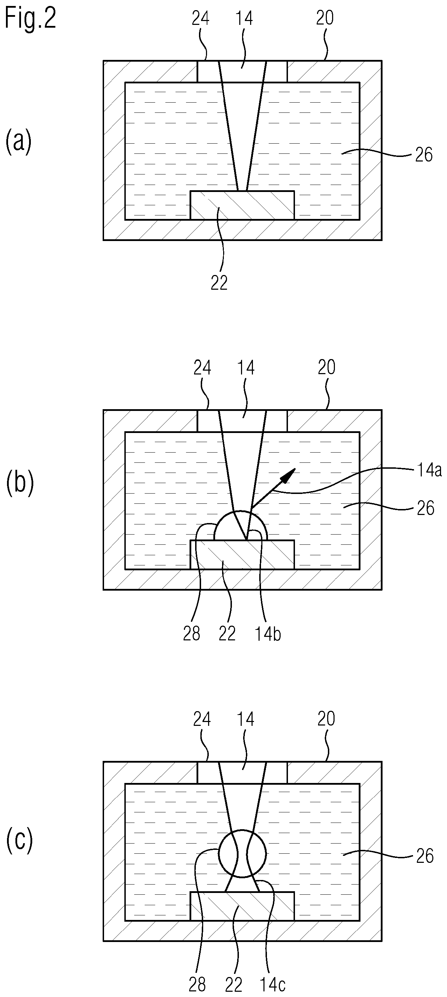

In der Fig. 2 sind die bei einem Laserbearbeitungsprozess gemäß dem Stand der Technik entstehenden Probleme veranschaulicht. Wie in der Fig. 2 gezeigt, kommt es bei der Laserbearbeitung in Flüssigkeit zur Entstehung von Gasblasen, die den Laserbearbeitungsprozess in negativer Weise beeinflussen.

In der Fig. 2 (a) ist zunächst der Idealfall dargestellt, bei dem innerhalb der Prozesskammer 20 keine Gasblasen vorhanden sind. In diesem Falls kann die fokussierte Laserstrahlung 14 ungestört auf die Oberfläche des Werkstückes 22 auftreffen und das Werkstück 22 erhitzen.

In Gegensatz hierzu ist in der Fig. 2 (b) der Fall gezeigt, in dem sich auf der Oberfläche des Werkstückes 22 eine haftende Gasblase 28 gebildet hat. Aufgrund des Brechungsindexunterschiedes zwischen der Flüssigkeit 26 und der Gasblase 28 wird ein Teil der eintreffenden Laserstrahlung 14 reflektiert. Die reflektierte Laserstrahlung 14a trifft dabei nicht auf die Oberfläche des Werkstückes 22 und kann somit für den Bearbeitungsprozess nicht verwendet werden. Darüber hinaus wird ein Teil der eintreffenden Laserstrahlung 14 abgelenkt. Die abgelenkte Laserstrahlung 14b trifft somit nicht an der gewünschten Stelle auf die Oberfläche des Werkstückes 22. Dadurch leidet die Genauigkeit des Laserbearbeitungsprozesses.

In der Fig. 2 (c) ist ein weiteres Szenario gezeigt, bei der im Bearbeitungsbereich eine freie Gasblase 28 vorhanden ist, die mit der fokussierten Laserstrahlung 14 wechselwirkt. Die Gasblase 28 bewirkt, dass die eintreffende Laserstrahlung 14 defokussiert wird und dass folglich eine defokussierte Laserstrahlung 14c auf die Oberfläche des Werkstückes 22 auftrifft. Dies führt regelmäßig dazu, dass die Strahlungsintensität (definiert als Leistung pro Fläche) nicht mehr ausreicht, um das Material auf der Oberfläche des Werkstückes 22 zu verdampfen.

Die vorstehend gezeigten Beispiele zeigen, dass in der Prozesskammer 20 entstehende Gasblasen dazu beitragen, dass der Prozess der Laserbearbeitung signifikant gestört wird. Insbesondere bewirken die Gasblasen eine reduzierte Prozessgeschwindigkeit, eine reduzierte Effizienz, Instabilitäten und Abweichungen vom gewünschten Bearbeitungsergebnis.

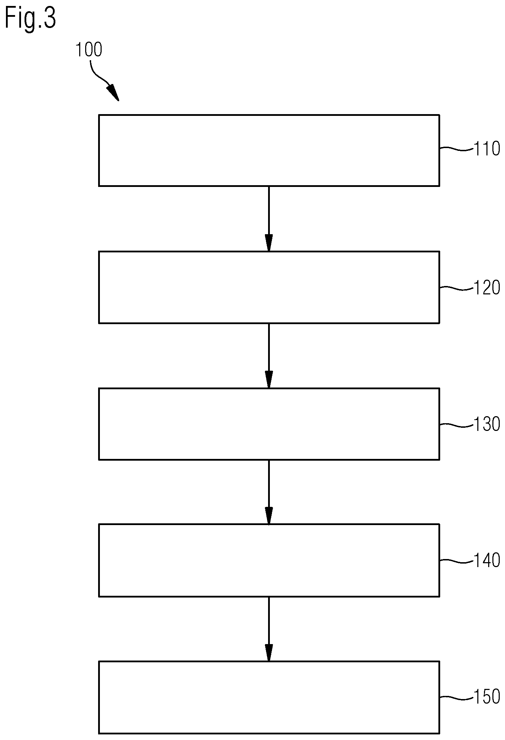

In der Fig. 3 ist ein Ausführungsbeispiel des erfindungsgemäßen Verfahrens 100 dargestellt. Zur Veranschaulichung des Ausführungsbeispiels wird nachfolgend auf einen "ersten Schritt", "zweiten Schritt", etc. Bezug genommen. Diese Terminologie legt jedoch ausdrücklich keine Reihenfolge fest, die im Rahmen der vorliegenden Erfindung zwingend erforderlich ist, sondern dient vielmehr zur Unterscheidung der einzelnen Verfahrensschritte. In einem ersten Schritt 110 wird ein Werkstück in einer Prozesskammer bereitgestellt, die mit Flüssigkeit befüllt ist. Eine gepulste Laserstrahlung wird in einem zweiten Schritt 120 auf eine Oberfläche des Werkstückes fokussiert. Dabei wird eine Fokussiereinheit verwendet. Für die Bearbeitung des Werkstückes wird in einem dritten Schritt 130 eine Relativbewegung zwischen der fokussierten Laserstrahlung und der Werkstückoberfläche erzeugt, wobei hierfür eine Positioniereinheit verwendet wird. Die Positioniereinheit kann beispielsweise als ein Scannerspiegel ausgebildet sein, der dazu ausgelegt ist, die Position der fokussierten Laserstrahlung auf der Oberfläche des Werkstückes einzustellen oder als ein Positioniertisch, der dazu ausgelegt ist, die Position des Werkstückes zu variieren. In einem vordefinierten Detektionsbereich wird in einem vierten Schritt 140 überprüft, ob eine Gasblase vorhanden ist. Hierzu wird eine Detektionseinheit verwendet, die insbesondere eine Kamera aufweisen kann. Sofern eine Gasblase detektiert wurde, wird in einem fünften Schritt 150 eine erste Aktion durch Vermeidung oder Reduzierung von Wechselwirkungseffekten zwischen der Laserstrahlung und der detektierten Gasblase durchgeführt. Anders ausgedrückt dient die erste Aktion dazu, die detektierte Gasblase aus dem Detektionsbereich bzw. aus dem Bearbeitungsbereich zu entfernen.

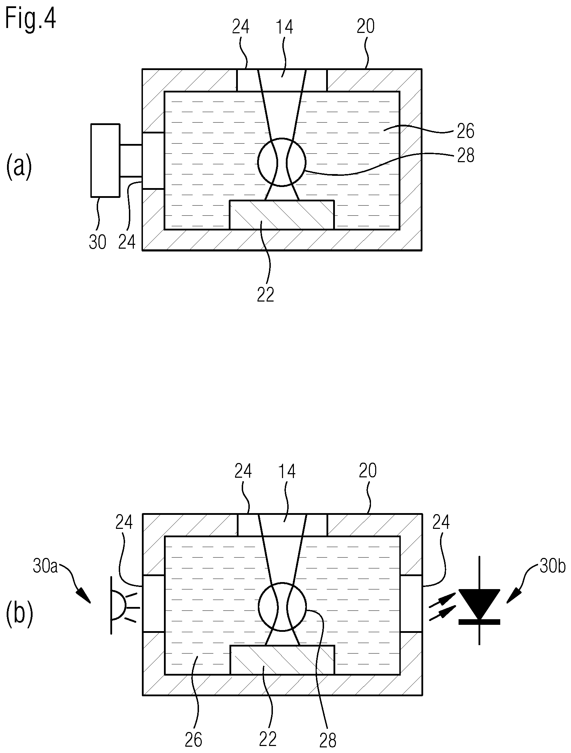

In der Fig. 4 sind Ausführungsbeispiele der vorliegenden Erfindung dargestellt, welche die Detektion der Gasblase betreffen.

In der Fig. 4 (a) ist ein Ausführungsbeispiel gezeigt, bei dem eine Detektionseinheit 30 vorgesehen ist, die als Kameraeinheit ausgebildet ist. Die Kameraeinheit nimmt einen Detektionsbereich auf, in dem Gasblasen als störend angesehen werden. Insbesondere kann die Kameraeinheit den Innenraum der Prozesskammer 20 überwachen. Die Kameraeinheit erzeugt dabei eine Bilddatei, die anschließend ausgewertet wird. Sofern in der generierten Bilddatei eine Gasblase erkannt wird, kann es vorgesehen sein, dass eine entsprechende Aktion zur Entfernung der Gasblase sowie zur Reduzierung der Wechselwirkungen durchgeführt wird. Die Kameraeinheit kann, wie in der Fig. 4 (a) gezeigt, radial zur Laserstrahlung 14 angeordnet sein. Alternativ hierzu kann die Kameraeinheit aber auch axial zur der Laserstrahlung positioniert sein.

Hierzu kann beispielsweise ein Strahlenteiler verwendet werden. Ferner kann es vorgesehen sein, dass die Detektionseinheit zwei Kameraeinheiten aufweist, die jeweils radial zu der Laserstrahlung angeordnet sind und um 90° zueinander versetzt angeordnet sind. Durch den Einsatz von zwei Kameraeinheiten kann die dreidimensionale Position der Gasblase 28 exakt ermittelt werden.

In der Fig. 4 (b) ist eine weitere Ausführungsform gezeigt, bei der die Detektionseinheit 30 eine LED 30a und eine Photodiode 30b aufweist. Die LED 30a und die Photodiode 30b sind auf zwei gegenüberliegenden Seiten der Prozesskammer 20 angeordnet. Das von der LED 30a emittierte Licht gelangt über ein transparentes Prozessfenster 24 in den Innenraum der Prozesskammer 20. Falls keine Gasblase in dem Detektionsbereich vorhanden ist, kann das von der LED 30a emittierte Licht unmittelbar aus dem gegenüberliegenden Prozessfenster 24 austreten und von der Photodiode 30b aufgenommen werden. Ist hingegen eine Gasblase 28 in dem Detektionsbereich vorhanden, so wird das von der LED 30a emittierte Licht an der Gasblase 28 gestreut, sodass die Photodiode 30b ein entsprechend verändertes Signal erzeugt. Durch Vergleich des Ausgabesignals der Photodiode 30b mit zuvor aufgenommen Referenzsignalen, kann darauf geschlossen werden, ob sich eine Gasblase in dem überwachten Detektionsbereich befindet.

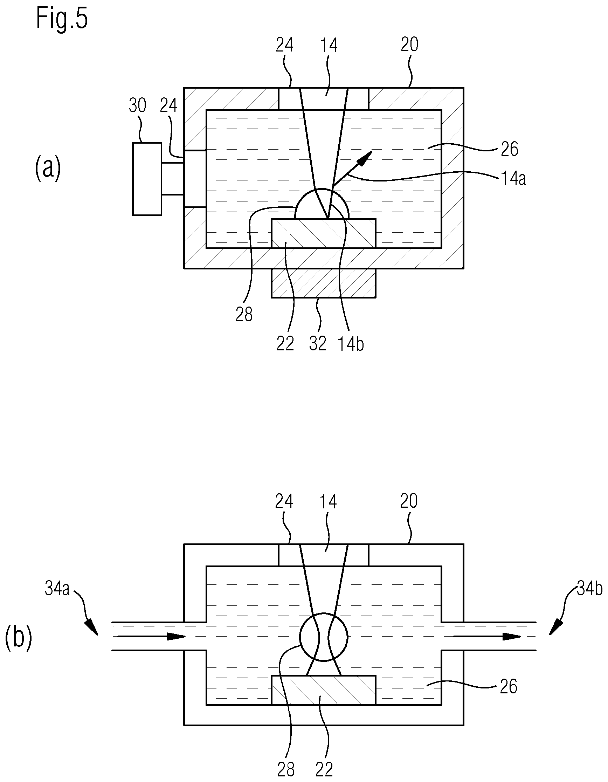

In der Fig. 5 sind verschiedene Ausführungsbeispiele der vorliegenden Erfindung gezeigt, bei denen unterschiedliche Aktionen zur Vermeidung von Wechselwirkungseffekten zwischen der Laserstrahlung 14 und der Gasblase 28 vorgesehen sind. In der Fig. 5 (a) weist das dargestellte Ausführungsbeispiel einen zusätzlichen Ultraschallgenerator 32 auf, der an der Unterseite der Prozesskammer 20 angeordnet ist. Erkennt die Detektionseinheit 30, dass eine Gasblase 28 in dem Detektionsbereich vorhanden ist, so kann der Ultraschallgenerator 32 durch eine Steuereinheit (in dieser Figur nicht abgebildet) aktiviert werden. Dadurch kann die Gasblase 28 von der Oberfläche des Werkstückes 22 losgelöst werden. Beispielsweise kann es vorgesehen sein, dass der Ultraschallgenerator 32 nur dann aktiviert wird, wenn eine haftende Gasblase 28 detektiert wird. Wie bereits in den Fign. 2 (b) und (c) gezeigt, unterscheiden sich haftende und freie Gasblasen deutlich in ihrer Form und können daher optisch voneinander unterschieden werden.

Zudem ist in der Fig. 5 (b) eine weitere Ausführungsform der Erfindung gezeigt, bei der ein Strömungsgenerator 34 vorgesehen ist. In diesem Ausführungsbeispiel weist der Strömungsgenerator 34 einen Flüssigkeitszulauf 34a und einen Flüssigkeitsablauf 34b auf sowie eine Druckpumpe und eine Saugpumpe, die mit dem Flüssigkeitszulauf 34a und dem Flüssigkeitsablauf 34b verbunden sind, wobei die genannten Pumpen in der Fig. 5 (b) nicht abgebildet sind. Der Strömungsgenerator 34 ist dazu ausgelegt, im Falle einer detektierten Gasblase 28 eine Strömung zu erzeugen, durch die die Gasblase aus dem Bearbeitungsbereich herausbefördert wird. Auch kann es vorgesehen sein, dass der Ultraschallgenerator 32 und der Strömungsgenerator 34 miteinander kombiniert werden. Dadurch kann beispielsweise der Ultraschallgenerator 32 aktiviert werden, sofern eine haftende Gasblase 28 detektiert wurde, während der Strömungsgenerator 34 aktiviert wird, sofern eine freie Gasblase detektiert wurde. Auch kann es in vorteilhafter Weise vorgesehen sein, dass im Falle der Detektion einer haftenden Gasblase zunächst der Ultraschallgenerator 32 zum Einsatz kommt, um die Gasblase 28 von der Oberfläche des Werkstückes 22 loszulösen, während im Anschluss der Strömungsgenerator 34 aktiviert wird, um die freie Gasblase aus dem Detektionsbereich bzw. aus dem Bearbeitungsbereich abzutransportieren.

### BEZUGSZEICHENLISTE

- 10: System zur Laserbearbeitung
- 12: Laserstrahlquelle
- 14: Laserstrahlung
- 14a: reflektierte Laserstrahlung
- 14b: abgelenkte Laserstrahlung
- 14c: defokussierte Laserstrahlung
- 16: Positioniereinheit
- 18: Fokussiereinheit
- 20: Prozesskammer
- 22: Werkstück
- 22a: Werkstückoberfläche
- 24: Prozessfenster
- 26: Flüssigkeit
- 28: Gasblase
- 30: Detektionseinheit
- 30a: LED
- 30b: Photodiode
- 32: Ultraschallgenerator
- 34: Strömungsgenerator
- 34a: Flüssigkeitszulauf
- 34b: Flüssigkeitsablauf
- 100: Verfahren zur Laserbearbeitung
- 110: erster Verfahrensschritt
- 120: zweiter Verfahrensschritt
- 130: dritter Verfahrensschritt
- 140: vierter Verfahrensschritt
- 150: fünfter Verfahrensschritt

## Patentansprüche

1. Verfahren zur Laserbearbeitung von Werkstücken in Flüssigkeit, wobei das Verfahren die nachfolgenden Schritte aufweist:
- Bereitstellen (110) eines Werkstückes (22) in einer mit einer Flüssigkeit befüllten Prozesskammer (20);
- Fokussierung (120) einer gepulsten Laserstrahlung (14) auf eine Oberfläche des Werkstückes (22) unter Verwendung einer Fokussiereinheit (18);
- Erzeugung (130) einer relativen Bewegung zwischen der fokussierten Laserstrahlung und der Werkstückoberfläche (22a) unter Verwendung einer Positioniereinheit (16);
- Detektion (140) einer Gasblase (28) in einem vordefinierten Detektionsbereich unter Verwendung einer Detektionseinheit (30); und
- Durchführung einer ersten Aktion (150) zur Vermeidung oder Reduzierung von Störeffekten bei der Laserbearbeitung, die durch die detektierte Gasblase (28) verursacht werden;
- wobei das Verfahren **gekennzeichnet durch** die nachfolgenden Schritte:
- Ermittlung einer Transitzeit für die detektierte Gasblase (28), innerhalb derer sich die Gasblase (28) in einem Bereich aufhält, in dem eine Wechselwirkung zwischen der Laserstrahlung (14) und der Gasblase (28) zu erwarten ist; und
- Deaktivierung der Laserstrahlung (14) für die Dauer der ermittelten Transitzeit; oder
- Positionierung der Laserstrahlung (14) derart, dass die Laserstrahlung (14) außerhalb der Gasblase (28) angeordnet ist.

2. Verfahren nach Anspruch 1, **dadurch gekennzeichnet, dass** die Detektion (140) der Gasblase die folgenden Schritte aufweist:
- Erstellung einer photographischen Aufnahme von dem vordefinierten Detektionsbereich unter Verwendung einer Kameraeinheit und Erzeugung einer entsprechenden Bilddatei; und
- Auswertung der Bilddatei, wobei die Auswertung insbesondere den Einsatz eines Musterkennungsalgorithmus umfasst.

3. Verfahren nach einem der Ansprüche 1 oder 2, **dadurch gekennzeichnet, dass** die Detektion (140) der Gasblase (28) eine Streulichtmessung umfasst, wobei die Streulichtmessung insbesondere die folgenden Schritte aufweist:
- Beleuchtung des Detektionsbereiches unter Verwendung einer LED (30a);
- Aufnahme eines Detektionssignals unter Verwendung einer Photodiode (30b), wobei die Photodiode (30b) dazu ausgelegt ist, die von der LED (30a) emittierte Strahlung nach Ausbreitung durch den Detektionsbereich aufzunehmen;
- Auswertung des Detektionssignals unter Verwendung einer Auswertungseinheit.

4. Verfahren nach einem der vorherigen Ansprüche, **dadurch gekennzeichnet, dass** die erste Aktion (150) eine Veränderung der Strömungsgeschwindigkeit innerhalb der Prozesskammer (20) umfasst.

5. Verfahren nach einem der vorherigen Ansprüche, **dadurch gekennzeichnet, dass** die erste Aktion (150) eine Erzeugung von Ultraschallwellen in der Umgebung der detektierten Gasblase (28) unter Verwendung eines Ultraschallgenerators (32) umfasst.

6. Verfahren nach einem der vorherigen Ansprüche, **dadurch gekennzeichnet, dass** die erste Aktion (150) eine Veränderung der Strömungsart umfasst, wobei die Strömungsart insbesondere zwischen laminar, turbulent und pulsierend variiert werden kann.

## Claims

1. A method for laser processing of workpieces in liquid, the method comprising the following steps:
- providing (110) a workpiece (22) in a process chamber (20) filled with a liquid;
- focusing (120) a pulsed laser radiation (14) onto a surface of the workpiece (22) using a focusing unit (18);
- producing (130) a relative movement between the focused laser radiation and the workpiece surface (22a) using a positioning unit (16);
- detecting (140) a gas bubble (28) in a predefined detection region using a detection unit (30); and
- carrying out a first action (150) to avoid or reduce interference effects during laser processing, which are caused by the detected gas bubble (28);
- the method being **characterized by** the following steps:
- determining a transit time for the detected gas bubble (28), in which the gas bubble (28) is present in a region in which an interaction between the laser radiation (14) and the gas bubble (28) is to be expected; and
- deactivating the laser radiation (14) for the duration of the determined transit time; or
- positioning the laser radiation (14) such that the laser radiation (14) is arranged outside the gas bubble (28).

2. The method according to claim 1, **characterized in that** the detection (140) of the gas bubble comprises the following steps:
- capturing a photographic image of the predefined detection region with the use of a camera unit and generating a corresponding image file; and
- evaluating the image file, the evaluation particularly comprising the use of a pattern recognition algorithm.

3. The method according to claim 1 or 2, **characterized in that** the detection (140) of the gas bubble (28) comprises a scattered light measurement, the scattered light measurement comprising in particular the following steps:
- illuminating the detection region with the use of an LED (30a);
- capturing a detection signal with the use of a photodiode (30b), the photodiode (30b) being configured to pick up the radiation emitted by the LED (30a) after its propagation through the detection region;
- evaluating the detection signal with the use of an evaluation unit.

4. The method according to any one of the preceding claims, **characterized in that** the first action (150) comprises a change of the flow velocity in the process chamber (20).

5. The method according to any one of the preceding claims, **characterized in that** the first action (150) comprises a generation of ultrasound waves in the vicinity of the detected gas bubble (28) with the use of an ultrasound generator (32).

6. The method according to any one of the preceding claims, **characterized in that** the first action (150) comprises a change in the flow type, where the flow type can in particular be varied between laminar, turbulent, and pulsating.

## Revendications

1. Procédé d'usinage au laser de pièces à usiner dans un liquide, le procédé comprenant les étapes suivantes consistant à :
- fournir (110) une pièce à usiner (22) dans une chambre de traitement (20) remplie d'un liquide ;
- focaliser (120) un rayonnement laser pulsé (14) sur une surface de la pièce à usiner (22) à l'aide d'une unité de focalisation (18) ;
- générer (130) un mouvement relatif entre le rayonnement laser focalisé et la surface (22a) de la pièce à usiner à l'aide d'une unité de positionnement (16) ;
- détecter (140) une bulle de gaz (28) dans une zone de détection prédéfinie à l'aide d'une unité de détection (30) ; et
- exécuter une première action (150) pour éviter ou réduire les effets perturbateurs lors de l'usinage au laser, qui sont causés par la bulle de gaz (28) détectée ;
- le procédé étant **caractérisé par** les étapes suivantes consistant à :
- déterminer un temps de transit pour la bulle de gaz (28) détectée, pendant lequel la bulle de gaz (28) se trouve dans une zone où on doit s'attendre à une interaction entre le rayonnement laser (14) et la bulle de gaz (28) ; et
- désactiver le rayonnement laser (14) pendant la durée du temps de transit déterminé ; ou
- positionner le rayonnement laser (14) de telle sorte que le rayonnement laser (14) soit disposé à l'extérieur de la bulle de gaz (28).

2. Procédé selon la revendication 1,
**caractérisé en ce que** la détection (140) de la bulle de gaz comprend les étapes suivantes consistant à :
- créer une prise de vue photographique de la zone de détection prédéfinie à l'aide d'une unité de caméra, et générer un fichier image correspondant ; et
- évaluer le fichier image, l'évaluation comprenant en particulier l'utilisation d'un algorithme de reconnaissance de motifs.

3. Procédé selon l'une des revendications 1 ou 2,
**caractérisé en ce que** la détection (140) de la bulle de gaz (28) consiste à mesurer la lumière diffuse, la mesure de la lumière diffuse comprenant en particulier les étapes suivantes consistant à :
- éclairer la zone de détection à l'aide d'une DEL (30a) ;
- enregistrer un signal de détection à l'aide d'une photodiode (30b), la photodiode (30b) étant conçue pour enregistrer le rayonnement émis par la DEL (30a) après propagation à travers la zone de détection ;
- évaluer le signal de détection à l'aide d'une unité d'évaluation.

4. Procédé selon l'une des revendications précédentes,
**caractérisé en ce que** la première action (150) consiste à modifier la vitesse d'écoulement à l'intérieur de la chambre de traitement (20).

5. Procédé selon l'une des revendications précédentes,
**caractérisé en ce que** la première action (150) consiste à générer des ondes ultrasonores dans l'environnement de la bulle de gaz (28) détectée à l'aide d'un générateur d'ultrasons (32).

6. Procédé selon l'une des revendications précédentes,
**caractérisé en ce que** la première action (150) consiste à modifier le type d'écoulement, le type d'écoulement pouvant en particulier varier entre un type laminaire, turbulent et pulsatoire.
